# EUROPEAN PATENT APPLICATION

(11) **EP 3 664 257 A1**
(43) Date of publication of application: **10.06.2020**
(21) Application number: 18842313.1
(22) Date of filing: 25.07.2018
(51) Int. Cl.: H02K 5/04, F04D 29/00, F04D 29/62, H02K 7/14

(54) **BLOWER AND FIREPROOF COVER FOR MOTOR**

(30) Priority: 31.07.2017 JP 2017147870
(71) Applicant: Daikin Industries, Ltd., Osaka-shi, Osaka 530-8323 (JP)
(72) Inventor: NAGAO, Mitsuhisa, Osaka-shi, Osaka 530-8323 (JP)
(74) Representative: Conti, Marco
(86) International application number: PCT/JP2018/027926
(87) International publication number: WO 2019/026727

(57) **Abstract**

A less expensive metal flame-retardant cover easily enabling tight contact with a resin cylindrical surface of a motor is provided. A less expensive fan achieving a high flame retardation function is provided. A motor (31) has a resin cylindrical surface and rotates an impeller configured to generate an air flow. A metal flame-retardant cover (40) includes a tabular metal member (41). The metal member (41) has a cylindrical portion wound to be smaller in diameter than the cylindrical surface of the motor (31) and have ends overlapped with each other, and the cylindrical portion being elastically deformed covers the cylindrical surface of the motor (31).

## Description

### TECHNICAL FIELD

The present disclosure relates to a fan and a flame-retardant cover of a motor, and particularly relates to a fan including a motor having a resin surface, and a flame-retardant cover of the motor.

### BACKGROUND ART

Conventionally, there has been typically adopted a motor configured to rotate an impeller of a fan. As disclosed in Patent Literature 1 (JP 2003-269385 A), usages of the fan need weight reduction of the fan in many cases, including a case where the fan is attached to a ceiling and another case where the fan is attached to a wall. Patent Literature 1 discloses a motor provided with a resin motor cover that is molded easily and is ideal for weight reduction.

### SUMMARY OF THE INVENTION

### <Technical Problems>

The resin motor cover disclosed in Patent Literature 1 may fail to achieve sufficient flame retardation. A motor having a resin side face may particularly fail to exhibit a sufficient flame retardation function against combustion caused by a coil in the motor. A motor achieving a sufficient flame retardation function conventionally has a metal side face, in which case the motor is heavy in weight. A motor cover made of metal is difficult to be processed and tends to be expensive in order to achieve a high flame retardation function with tight contact with the side face of the motor.

It is an object of the present disclosure to provide a less expensive metal flame-retardant cover easily enabling tight contact with a resin cylindrical surface of a motor, and a less expensive fan achieving a high flame retardation function.

### <Solutions to Problem>

A fan according to a first aspect of the present disclosure includes: an impeller configured to rotate to generate an air flow; a motor having a resin cylindrical surface and configured to rotate the impeller; and a metal cover including a tabular metal member that has a cylindrical portion wound to be smaller in diameter than the cylindrical surface of the motor and have ends overlapped with each other, and covering the cylindrical surface with the cylindrical portion being elastically deformed.

In the fan according to the first aspect, when the cover made of metal to have a flame retardation function covers the resin cylindrical surface of the motor, the cylindrical portion of the cover exhibits elasticity because the wound cylindrical portion is in the elastically deformed state, and the cylindrical surface can be entirely covered even in the elastically deformed state with the ends being slightly overlapped with each other. The metal cover, which is constituted by the tabular metal member wound into the cylindrical shape, does not need drawing or the like and thus achieves cost reduction.

A fan according to a second aspect of the present disclosure is the fan according to the first aspect, in which the cover comprises a thin metal sheet having a thickness of greater than or equal to 0.1 mm and less than or equal to 0.5 and rolled as the cylindrical portion.

In the fan according to the second aspect, the thin metal sheet is at least 0.1 mm in thickness and the resin cylindrical surface of the motor can thus exhibit a sufficient flame retardation function. The thin metal sheet being at most 0.5 mm in thickness can be wound at a low cost and can be reduced in weight.

A fan according to a third aspect of the present disclosure is the fan according to the first or second aspect, in which the cover further includes a metal lid fitted along an axis of the motor.

In the fan according to the third aspect, the metal lid is fitted along the axis of the motor and can thus prevent flaming along the axis of the motor from the resin cylindrical surface.

A fan according to a fourth aspect of the present disclosure is the fan according to the third aspect, in which the metal lid of the cover has an annular portion laid over the cylindrical portion of the metal member.

In the fan according to the fourth aspect, the annular portion of the metal lid is laid over the cylindrical portion constituted by the tabular metal member being simply wound, and the annular portion can thus press the cylindrical portion.

A fan according to a fifth aspect of the present disclosure is the fan according to any one of the first to fourth aspects, in which the motor allows a harness to be led out from the cylindrical surface at a position opposite to a position provided with the impeller, and the metal member of the cover has a cutout positioned correspondingly to a led portion of the harness.

In the fan according to the fifth aspect, the metal member additionally has a simple structure of the cutout to allow the harness to be led out and allow the cylindrical surface of the motor around the harness to be covered. This achieves structural simplification of the cover applicable to a motor provided with a harness led out of a cylindrical surface.

A fan according to a sixth aspect of the present disclosure is the fan according to any one of the first to fifth aspects, and further includes a support supporting without being in contact with the cylindrical portion of the cover.

In the fan according to the sixth aspect, the support is not in contact with the cylindrical portion of the cover to allow the motor to be supported with no application of stress to the simply wound cylindrical portion of the cover.

A flame-retardant cover of a motor according to a seventh aspect of the present disclosure is a flame-retardant cover of a fan motor having a resin cylindrical surface and configured to rotate an impeller of a fan, the flame-retardant cover including: a tabular metal member having a cylindrical portion constituted by a thin metal sheet that has a thickness of grater than or equal to 0.1 mm and less than or equal to 0.5 mm, is wound to be smaller in diameter than the cylindrical surface of the motor, and has ends overlapped with each other, and covering the cylindrical surface with the cylindrical portion being elastically deformed; and a metal lid having an annular portion and fitted along an axis of the motor to cause the annular portion to be laid over the cylindrical portion.

In the flame-retardant cover of the motor according to the seventh aspect, when the metal cover covers the resin cylindrical surface of the motor, the cylindrical portion exhibits elasticity because the wound cylindrical portion is in the elastically deformed state, and the cylindrical surface can be entirely covered even in the elastically deformed state with the ends being slightly overlapped with each other. Furthermore, the thin metal sheet is at least 0.1 mm in thickness and the resin cylindrical surface of the motor can thus exhibit a sufficient flame retardation function. Moreover, the thin metal sheet being at most 0.5 mm in thickness facilitates manufacture through winding the thin metal sheet. The annular portion of the metal lid is laid over the cylindrical portion constituted by the tabular metal member being simply wound, and the annular portion can thus press the cylindrical portion. The cylindrical portion, which is made of the tabular metal member wound into the cylindrical shape, does not need drawing the metal member.

### <Advantageous Effects of Invention>

In the fan according to the first aspect of the present disclosure, the cylindrical portion of the metal member of the cover can be easily made in tight contact with the entire resin cylindrical surface of the motor, to achieve a high flame retardation function at a low cost.

The fan according to the second aspect of the present disclosure achieves an excellent flame retardation function at a low cost.

The fan according to the third aspect of the present disclosure achieves improvement in flame retardation function of the motor.

In the fan according to the fourth aspect of the present disclosure, the attached metal lid supports to keep the shape of the cylindrical portion of the metal cover and achieves reduction in the number of parts necessary for provision of the cover.

The fan according to the fifth aspect of the present disclosure inhibits increase in cost for provision of the metal cover along the motor provided with the harness led out of the resin cylindrical surface.

The fan according to the sixth aspect of the present disclosure facilitates assembly to the fan, of the motor provided with the metal cover being elastically deformed to be in tight contact with the motor.

In the flame-retardant cover of the motor according to the seventh aspect of the present disclosure, the cylindrical portion of the metal member of the cover can be easily made in tight contact with the entire resin cylindrical surface of the motor, to provide the motor having the resin cylindrical surface with an excellent flame retardation function at a low cost.

### BRIEF DESCRIPTION OF THE DRAWINGS

FIG. 1 is a perspective view exemplifying an air cleaner including a fan according to an embodiment.
FIG. 2 is a plan view depicting a fan electromotor assembly in the fan being mounted onto a bottom plate.
FIG. 3 is a perspective view depicting attachment of a side plate of a fan scroll in the fan.
FIG. 4 is a rear view of the fan.
FIG. 5 is an explanatory exploded perspective view of a motor assembly.
FIG. 6 is an exploded perspective view depicting a configuration of the fan electromotor assembly.
FIG. 7 is a sectional view of the fan electromotor assembly.
FIG. 8 is a front view of a support for a motor.
FIG. 9 is a perspective view of the support for the motor.
FIG. 10 is an exploded perspective view of a flame-retardant cover according to an embodiment.
FIG. 11 is a perspective view of the flame-retardant cover according to the embodiment.
FIG. 12 is an exploded perspective view of a flame-retardant cover according to a modification example 1A.
FIG. 13 is a perspective view of the flame-retardant cover according to the modification example 1A.

### DESCRIPTION OF EMBODIMENTS

### (1) Entire configuration

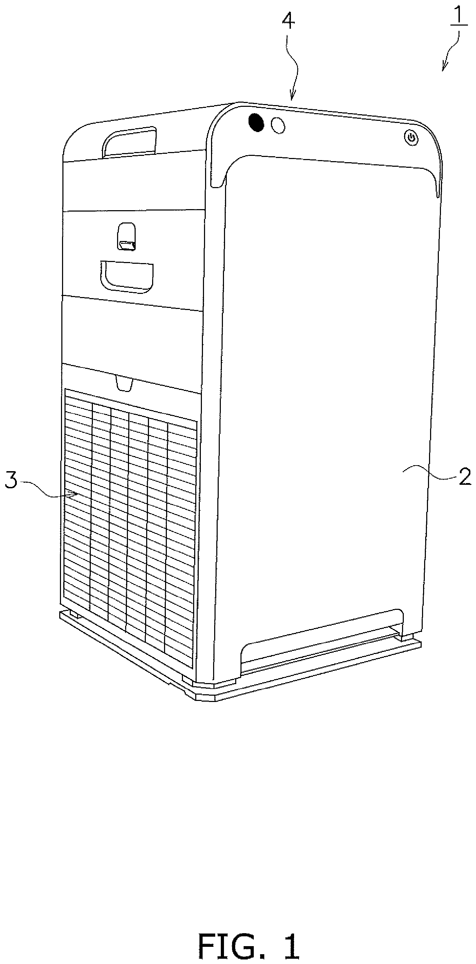

A fan according to an embodiment of the present disclosure will now be described with reference to the drawings. FIG. 1 depicts outer appearance of an air cleaner including the fan according to the embodiment. An air cleaner 1 includes a resin housing 2 having a bottom provided with an intake port 3 and a top face provided with a blow-out port 4.

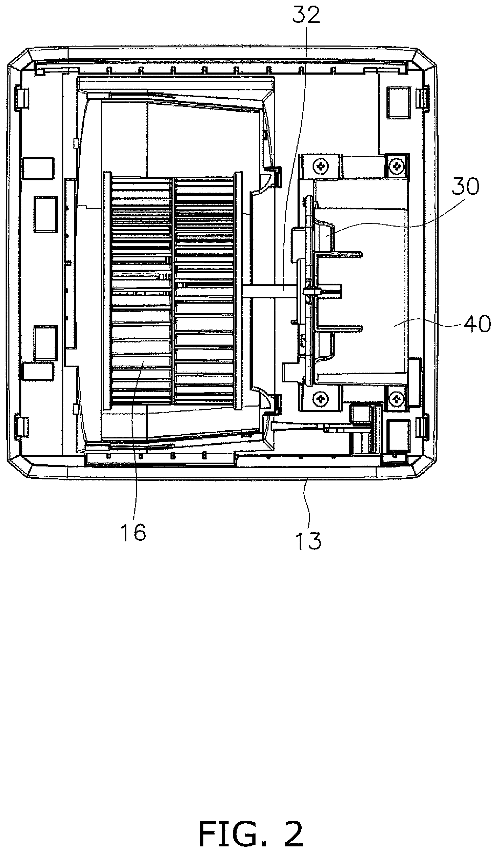

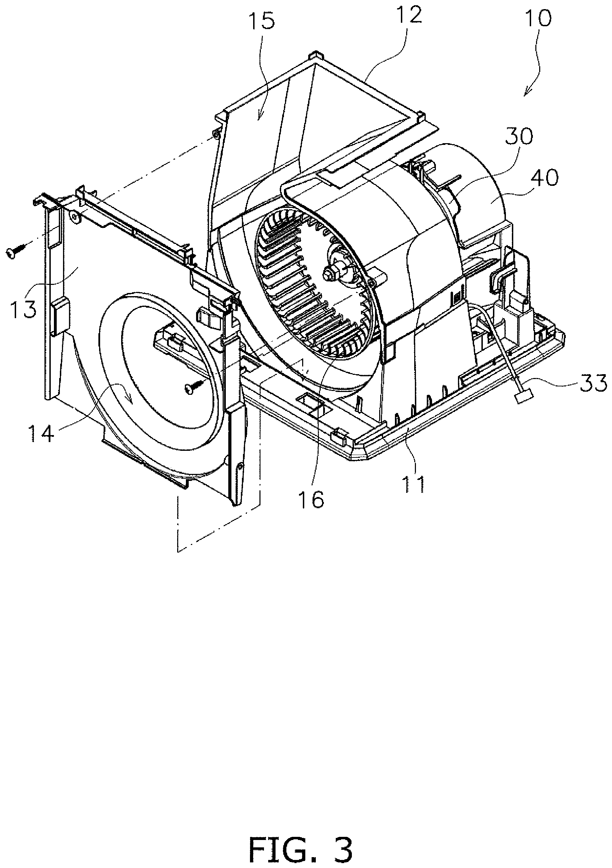

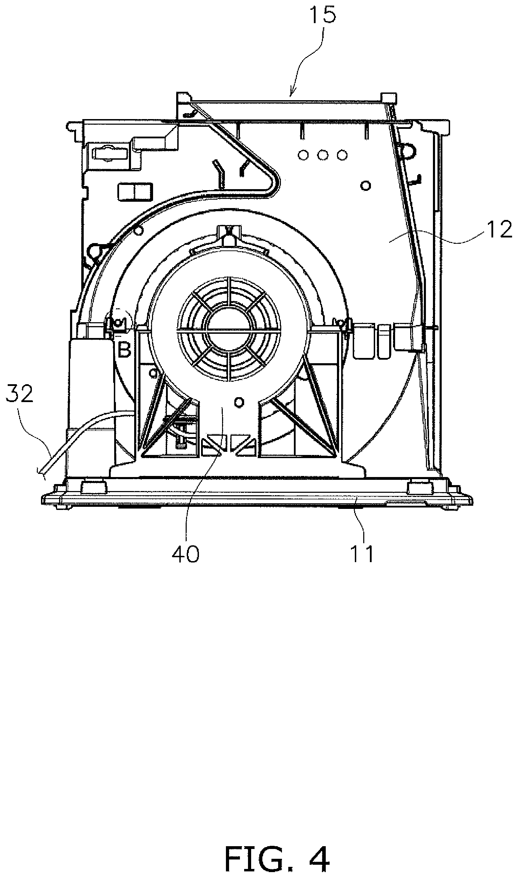

FIG. 2 depicts a fan electromotor assembly that includes a motor provided with an impeller and is attached to a bottom plate. FIG. 3 depicts the fan diagonally viewed from a right upper front position. FIG. 3 depicts a fan 10 provided with a side plate of a fan scroll. FIG. 4 depicts the fan viewed from backward.

The fan 10 is provided with a bottom plate 11 attached to a bottom face of the air cleaner 1. As depicted in FIG. 3, the fan scroll includes an upper member 12 and a side plate 13 both attached to the assembly depicted in FIG. 2.

The fan 10 is a sirocco fan configured to suck air through an opening 14 provided in the side plate 13 and blow out air through an upper opening 15.

The opening 14 and the opening 15 interpose an impeller 16 configured to rotate to generate an air flow from the opening 14 to the opening 15. The impeller 16 is a so-called sirocco fan rotor.

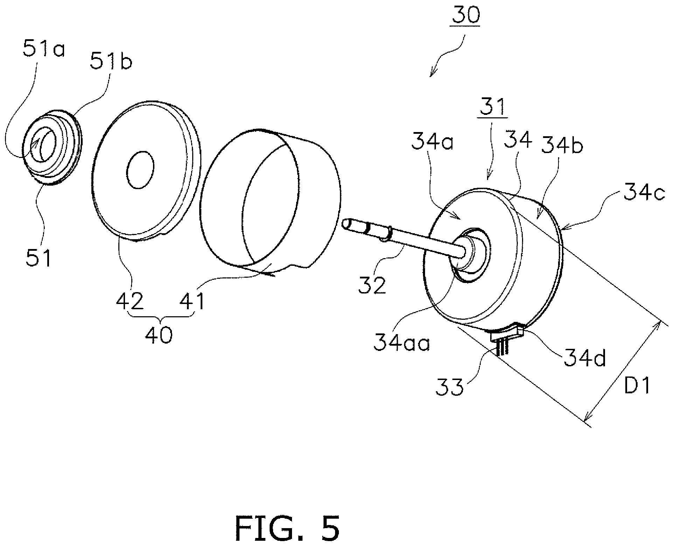

Amotor 31 (see FIG. 5) includes a drive shaft 32 coupled to the impeller 16 and rotates the impeller 16. The motor 31 is constituted by a DC electromotor or the like, and a harness 33 extends from the motor 31.

A motor assembly 30 is supported by a support 50 attached to the bottom plate 11. The impeller 16 is coupled to the drive shaft 32, and the support 50 thus supports the motor 31 as well as the impeller 16.

### (2) Detailed configurations

### (2-1) Motor assembly

The motor assembly 30 will be described in terms of its configuration with reference to FIG. 5. The motor assembly 30 includes the motor 31 and a flame-retardant cover 40. FIG. 5 depicts a front cushion rubber member 51 that is included in the support 50. The motor 31 includes the drive shaft 32 and the harness 33. The motor 31 includes a trunk 34 in a substantially cylindrical shape. The trunk 34 has such a substantially cylindrical shape, failing to have a perfect cylindrical shape due to a led portion of the harness 33 and unevenness of a front face 34a with the drive shaft 32 protruding therefrom. However, the trunk 34 has a side face 34b mostly having a cylindrical surface. In other words, the motor 31 has a cylindrical surface. The front face 34a and the side face 34b of the cylindrical trunk 34 each have a resin surface. The motor 31 accordingly has a resin cylindrical surface. The trunk 34 has a rear face 34c covered with a metal member.

The resin portion of the trunk 34 is made of a thermosetting resin. Examples of the thermosetting resin for the trunk 34 include an unsaturated polyester resin. The trunk 34 may be made of a bulk molding compound (BMC) mainly containing an unsaturated polyester resin.

The trunk 34 of the motor 31 has a protrusion 34d having a rectangular parallelepiped shape and allowing the harness 33 to be led out of the side face 34b. The flame-retardant cover 40 is thus shaped to be along the protrusion 34d.

The flame-retardant cover 40 includes a cylindrical metal member 41 and a metal lid 42. The cylindrical metal member 41 is in tight contact with the side face 34b of the trunk 34 of the motor 31. The metal lid 42 is fitted along an axis of the motor 31 and covers the front face 34a of the trunk 34. The flame-retardant cover 40 will be described later in terms of its detailed configuration.

Similarly to the metal lid 42, the front cushion rubber member 51 is fitted along the axis of the motor 31 after the metal lid 42 is fitted. With a fan electromotor assembly 20 being completed, the front cushion rubber member 51 inhibits the metal lid 42 from shifting away from the trunk 34 of the motor 31. The front cushion rubber member 51 inhibits the metal lid 42 from shifting away from the trunk 34, so that the metal lid 42 simply fitted to the trunk 34 will not be detached from the trunk 34.

### (2-2) Fan electromotor assembly

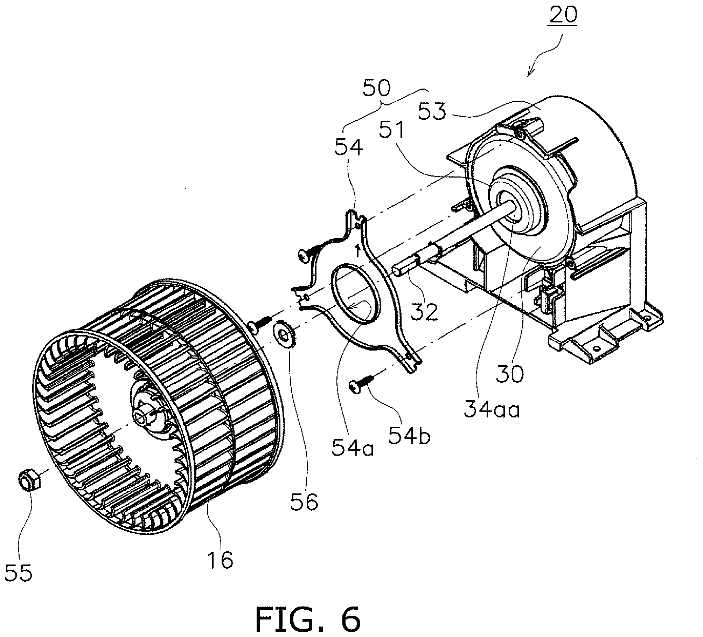

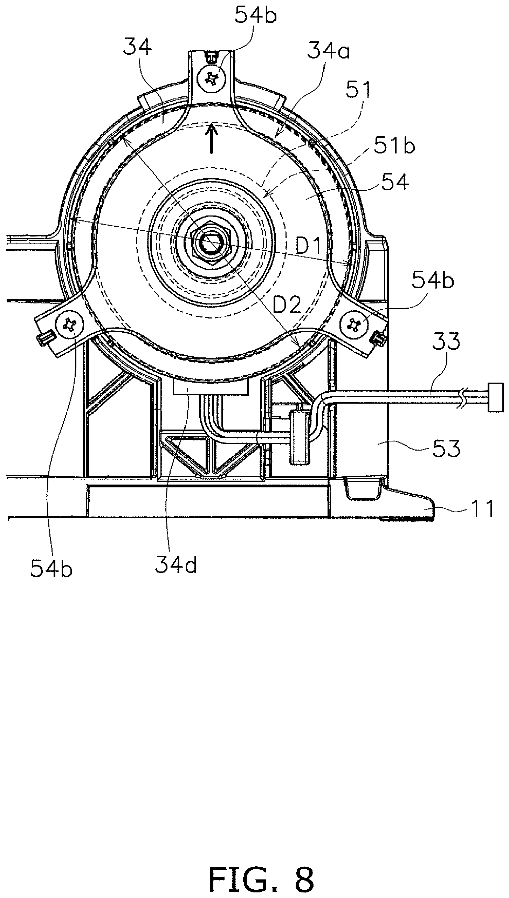

The fan electromotor assembly 20 will be described in terms of its configuration with reference to FIG. 6 to FIG. 9. FIG. 6 is an exploded perspective view of the fan electromotor assembly 20. The fan electromotor assembly 20 is formed by assembling the impeller 16, the motor assembly 30, and the support 50. The impeller 16 is fixed to the drive shaft 32 of the motor 31 by means of a nut 55 and a plain washer 56.

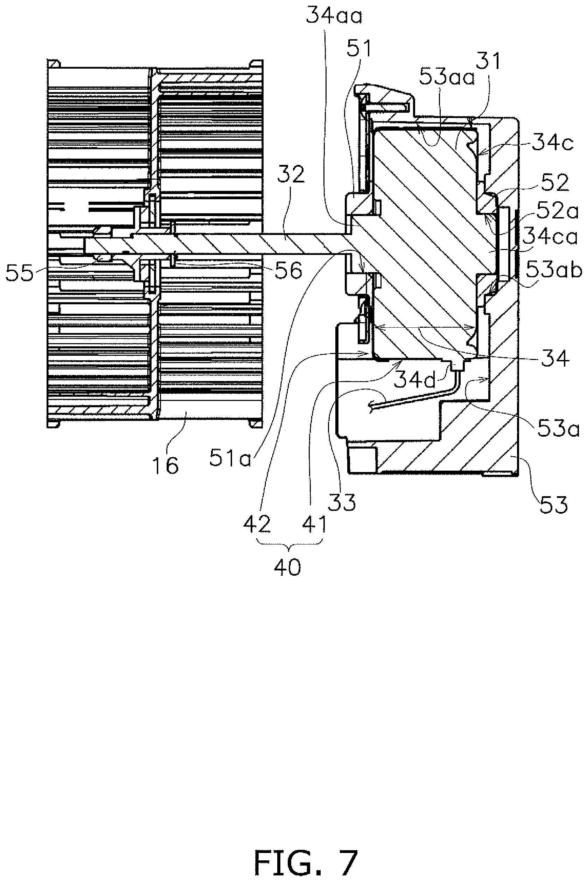

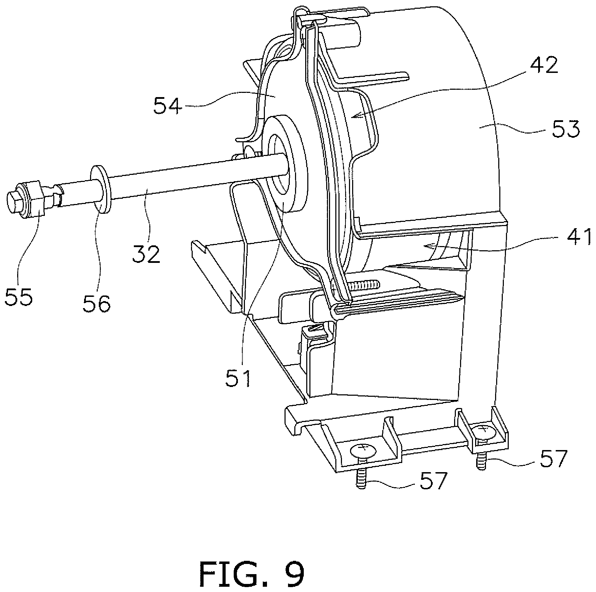

The support 50 includes the front cushion rubber member 51, a rear cushion rubber member 52, a metal fixture 53, and a metal attachment plate 54. The fixture 53 is fixed to the bottom plate 11 by means of a screw 57 (see FIG. 9). As depicted in FIG. 7, the fixture 53 has a cavity 53a extending forward and backward to be longer than the trunk 34 of the motor 31. The cavity 53a extends along a diameter of the trunk 34 to be longer than total length of the trunk 34 provided with the metal member 41. The cavity is provided such that the trunk 34 in tight contact with the metal member 41 can be attached without contacting a side wall 53aa of the cavity.

As depicted in FIG. 7, the rear face 34c of the motor 31 has a cylindrical projection 34ca which is protruding from the rear face 34c. The rear cushion rubber member 52 has a cylindrical hole 52a along the projection 34ca. The projection 34ca is fitted to the hole 52a to integrate the motor 31 with the rear cushion rubber member 52.

The cavity 53a of the fixture 53 has an internal face provided with a cylindrical recess 53ab allowing an outline of the rear cushion rubber member 52 to be fitted thereto without clearance. The rear cushion rubber member 52 is fitted to the recess 52ab to allow the rear cushion rubber member 52 as well as a rear portion of the motor 31 to be fixed.

The front face 34a of the trunk 34 of the motor 31 has a cylindrical projection 34aa which is protruding from the front face 34a. The front cushion rubber member 51 has a hole 51a in a cylindrical shape along the projection 34aa. The projection 34aa of the trunk 34 is fitted to the hole 51a to integrate the motor 31 with the front cushion rubber member 51.

The attachment plate 54 is provided with an opening 54a (see FIG. 6) to which the front cushion rubber member 51 is fitted. The opening 54a has an inner diameter substantially equal to an outer diameter of the front cushion rubber member 51. The front cushion rubber member 51 as well as a front portion of the motor 31 are fixed when the front cushion rubber member 51 is fitted to the opening 54a with the projection 34aa of the motor 31 being fitted to the front cushion rubber member 51.

The attachment plate 54 is fixed to the fixture 53 by means of three screws 54b. The front cushion rubber member 51 has a flange 51b (see FIG. 5) interposed between the attachment plate 54 and the front face 34a of the trunk 34 of the motor 31. The flange 51b is interposed between the metal lid 42 and the attachment plate 54, so that the metal lid 42 is fixed to the fixture 53 along with the attachment plate 54 without contacting the attachment plate 54.

In such a state where the metal lid 42 and the attachment plate 54 are fixed to the fixture 53, the protrusion 34d allowing the harness 33 to be led out is not in contact with the fixture 53.

### (2-3) Flame-retardant cover 40

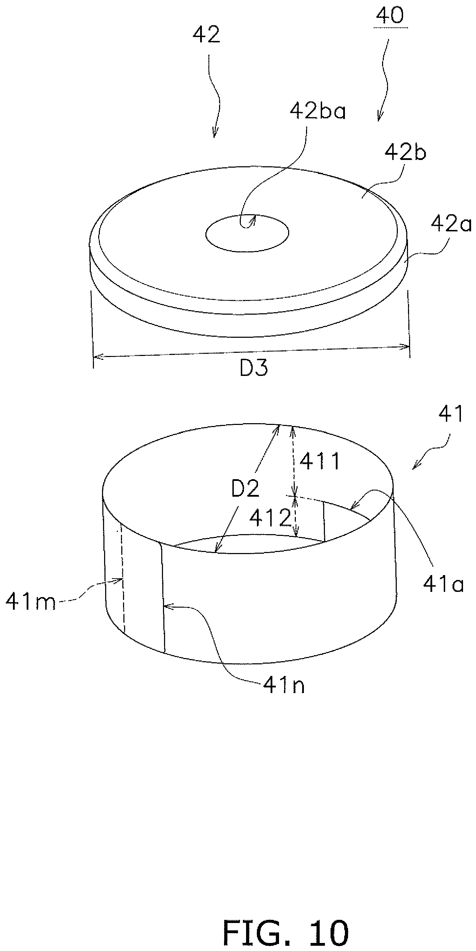

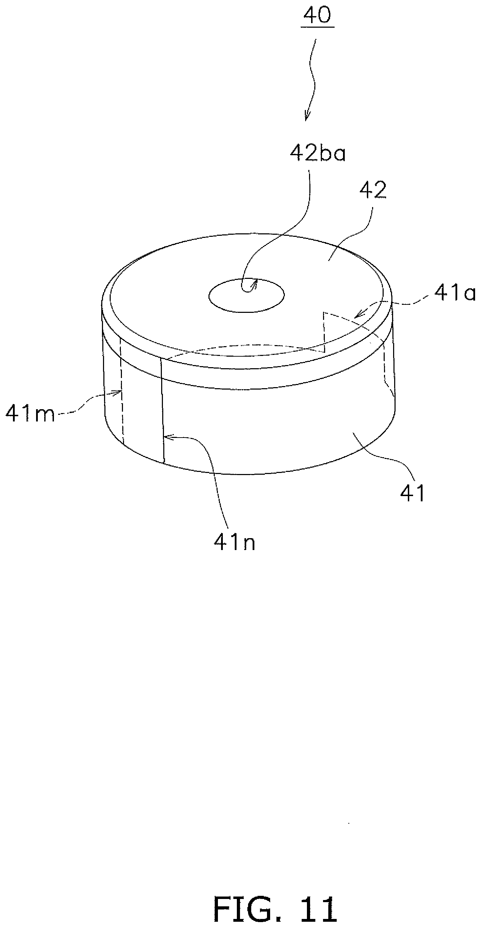

As depicted in FIG. 10 and FIG. 11, the metal member 41 of the flame-retardant cover 40 has a cylindrical portion 411 and a harness correspondence portion 412 having a C sectional shape. The cylindrical portion 411 and the harness correspondence portion 412 are differentiated from each other by a circumferential cutout 41a. The cutout 41a is sized to allow the protrusion 34d having the rectangular parallelepiped shape and provided to lead out the harness 33 to be fitted to the cutout 41a without clearance.

The metal member 41 comprises a thin metal sheet having a thickness of grater than or equal to 0.1 mm and less or equal to 0.5 mm and rolled. The thin metal sheet is preferred to be at least 0.2 mm thick to achieve a higher flame retardation function. The thin metal sheet may be made of stainless steel or the like. The stainless steel is preferred in terms of its rustproofness. Preferred examples of the stainless steel include austenitic stainless steel unlikely to be magnetized, such as SUS304.

The metal member 41 is constituted by the thin metal sheet that has a substantially rectangular shape except for the cutout 41a. The thin metal sheet in the rectangular shape is wound to form the metal member 41. For example, the thin metal sheet may be wound to become spiral in such a state that no stress is applied.

The thin metal sheet spirally wound without any stress has a first end 41m located outside and a second end 41n located inside, as depicted in FIG. 10. When the thin metal sheet is spirally wound to have the inner first end 41m and the outer second end 41n overlapped with each other, the metal member 41 has a cylindrical shape as depicted in FIG. 10. The cylindrical shape has a diameter D2 smaller than a diameter D1 (see FIG. 5) of the trunk 34 of the motor 31.

When the metal member 41 is fitted to the cylindrical surface of the trunk 34 of the motor 31, the cylindrical portion 411 being elastically deformed covers the cylindrical surface of the trunk 34. The metal member 41 fitted to the cylindrical surface of the trunk 34 is in tight contact with the cylindrical surface due to force generated by elastic deformation. Even with the cylindrical portion 411 being elastically deformed, the first end 41m and the second end 41n are still overlapped with each other. When the metal member 41 in tight contact with the cylindrical surface still has such overlap, the metal member 41 covers the entire cylindrical surface of the trunk 34.

The metal lid 42 of the flame-retardant cover 40 includes an annular portion 42a as a metal annular portion, and a disc portion 42b as a metal disc portion. The annular portion 42a has a diameter D3 larger than an outline of the cylindrical surface of the trunk 34 to which the metal member 41 is fitted. The metal lid 42 can thus be fitted from above the trunk 34 to which the metal member 41 is fitted. The disc portion 42b has a center provided with an opening 42ba to which the projection 34aa of the trunk 34 of the motor 31 is fitted.

### (3) Modification examples

### (3-1) Modification example 1A

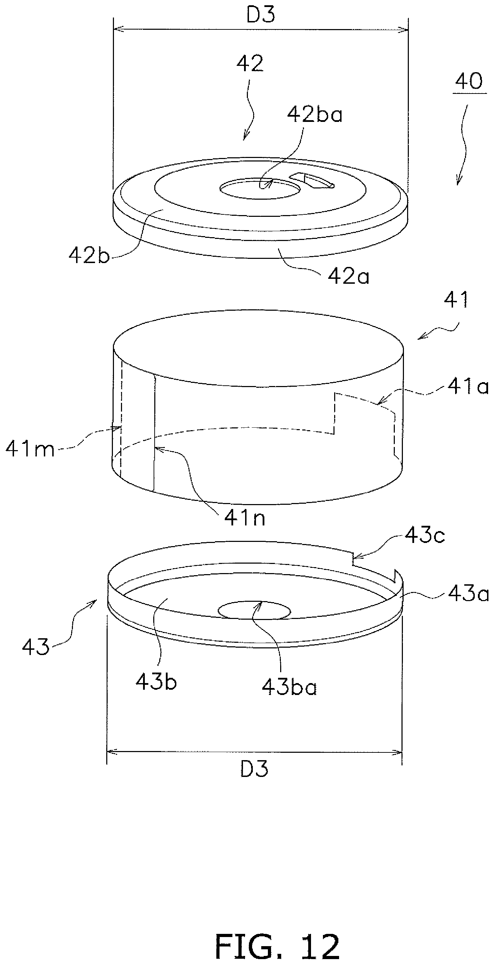

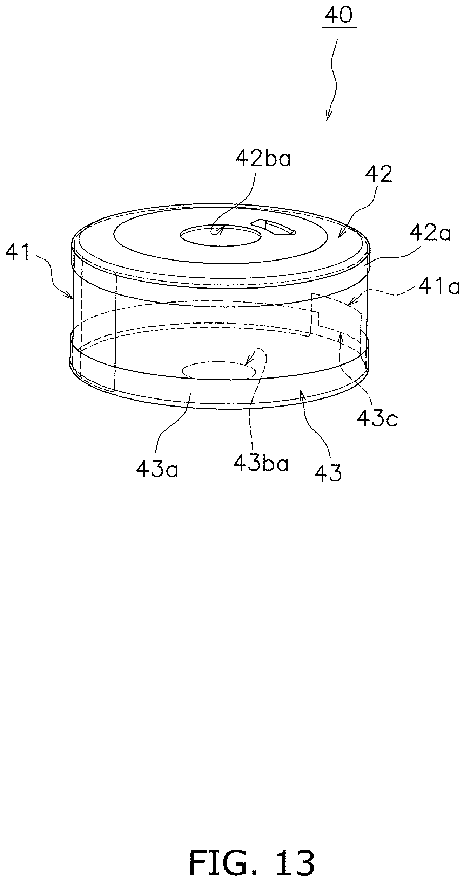

The embodiment described above refers to the flame-retardant cover 40 including the metal member 41 and the metal lid 42. As depicted in FIG. 12 and FIG. 13, the flame-retardant cover 40 may further include a metal bottom portion 43.

The metal bottom portion 43 is preferably provided in a case where the rear face 34c of the motor 31 is partially made of resin. Similarly to the metal lid 42, the metal bottom portion 43 depicted in FIG. 12 includes an annular portion 43a as a metal annular portion, and a disc portion 43b as a metal disc portion. The annular portion 43a is different from the annular portion 42a in that the annular portion 43a is provided with a cutout 43c corresponding to the cutout 41a.

When the annular portion 42a of the metal lid 42 has the diameter D3, the annular portion 43a of the metal bottom portion 43 may have the diameter D3. The diameter D3 of the annular portion 43a is larger than the outline of the cylindrical surface of the trunk 34 to which the metal member 41 is fitted. The metal bottom portion 43 can thus be fitted from above the trunk 34 to which the metal member 41 is fitted. The disc portion 43b has a center provided with an opening 43ba to which the rear projection 34ca of the trunk 34 of the motor 31 is fitted.

In a case where the motor has a metal front face, only the metal bottom portion 43 may be provided, without providing the metal lid 42.

### (3-2) Modification example 1B

The above embodiment refers to the fan 10 constituted as the sirocco fan. The fan, to which the technique according to the present disclosure is applicable, is not limited to the sirocco fan. The fan to which the technique according to the present disclosure is applicable may alternatively be constituted as a centrifugal fan other than the sirocco fan, or may be constituted as an axial fan, a mixed flow fan, or a cross-flow fan other than the centrifugal fan.

### (3-3) Modification example 1C

The motor 31 according to the above embodiment is driven with DC voltage. The motor to which the technique of the present disclosure is applied is not necessarily driven with DC voltage but may alternatively be driven with AC voltage.

### (3-4) Modification example 1D

The fan 10 according to the above embodiment includes the impeller 16 constituted as the fan rotor. The fan 10 may alternatively include any impeller other than the fan rotor. The technique according to the present disclosure is applicable to a fan including an impeller constituted as a propeller fan.

### (3-5) Modification example 1E

The above embodiment refers to the fan 10 attached to the air cleaner 1. The fan according to the present disclosure is not limitedly attached to the air cleaner.

### (3-6) Modification example 1F

The metal member 41 according to the above embodiment is made in tight contact with the cylindrical surface of the trunk 34 of the motor 31 by elasticity of the metal member 41 and the metal lid 42 and/or the metal bottom portion 43 pressing the metal member 41. In order to achieve tighter contact between the metal member 41 and the cylindrical surface of the trunk 34 without clearance, the flame-retardant cover may further include a tight binder fastening outer circumference of the metal member 41. Examples of the tight binder include a binding tape, a binding band, and a heat shrinkable tube. Examples of the binding tape include a filament tape provided with reinforcing fiber having high strength. Specifically, after the metal member 41 is wound around the cylindrical surface of the trunk 34, the filament tape may be attached around an outer circumferential face of the metal member 41. The filament tape is preferably wound at least once around the outer circumferential face of the metal member 41.

### (4) Characteristics

### (4-1)

As described above, the flame-retardant cover 40 of the fan 10 is made of metal and includes the metal member 41 that is elastically deformed to be in tight contact with and cover the cylindrical surface of the resin trunk 34 of the motor 31, to achieve improvement in flame retardation function of the motor 31. The metal member 41 of the flame-retardant cover 40 is elastically deformed to be in tight contact with the trunk 34 of the motor 31, without need for any member achieving the tight contact. The tabular metal member 41 can become a roll by winding a tabular thin metal sheet around a cylindrical member, for example. The metal flame-retardant cover 40 can thus be obtained without complicated metal drawing at a lower cost. Furthermore, the flame-retardant cover 40 is easily attached to the motor 31 to inhibit increase in assembling cost for the fan 10. The cylindrical portion 411 of the metal member 41 of the flame-retardant cover 40 can thus be easily made in tight contact with the entire cylindrical surface of the resin trunk 34 of the motor 31, to achieve a high flame retardation function of the fan 10 at a low cost.

### (4-2)

The tabular metal member 41 is easily processed by winding the thin metal sheet made of stainless steel which has a thickness of grater than or equal to 0.1 mm and less than or equal to 0.5 mm. The flame-retardant cover 40 can thus be obtained at a low cost and the fan 10 achieves an excellent flame retardation function at a low cost.

### (4-3)

The metal lid 42 of the flame-retardant cover 40 is fitted along the axis of the motor 31 to prevent flaming along the axis of the motor 31 from the cylindrical surface of the resin trunk 34 of the motor 31, achieving improvement in flame retardation function of the motor 31.

### (4-4)

The annular portion 42a of the metal lid 42 is laid over the cylindrical portion 411 constituted by the tabular metal member 41 being simply wound, and the annular portion 42a can thus press the cylindrical portion 411. The attached metal lid 42 supports to keep the shape of the cylindrical portion 411 of the metal flame-retardant cover 40 and achieves reduction in the number of parts necessary for provision of the flame-retardant cover 40.

### (4-5)

The metal member 41 additionally has the simple structure of the cutout 41a to allow the harness 33 to be led out and allow the cylindrical surface of the trunk 34 of the motor 31 around the harness 33 to be covered. This achieves structural simplification of the flame-retardant cover 40 of the motor 31 provided with the harness 33 led out of the cylindrical surface. This inhibits increase in cost for provision of the metal flame-retardant cover 40 along the motor 31 provided with the harness 33 led out of the cylindrical surface of the resin trunk 34.

### (4-6)

The front cushion rubber member 51, the rear cushion rubber member 52, the fixture 53, and the attachment plate 54 constituting the support are not in contact with the cylindrical portion 411 of the flame-retardant cover 40. The motor 31 can thus be supported with no application of stress to the simply wound cylindrical portion 411 of the flame-retardant cover 40. This facilitates assembly to the fan 10, of the motor 31 provided with the metal flame-retardant cover 40 being elastically deformed to be in tight contact with the motor 31.

The embodiments of the present disclosure have been described above. Various modifications to modes and details will be available without departing from the object and the scope of the present disclosure recited in the claims.

### REFERENCE SIGNS LIST

- 10: fan
- 16: impeller
- 31: motor
- 33: harness
- 34: trunk
- 40: flame-retardant cover
- 41: metal member
- 411: cylindrical portion
- 41a: cutout
- 42: metal lid
- 42a: annular portion
- 43: metal bottom portion
- 50: support
- 51: front cushion rubber member
- 52: rear cushion rubber member
- 53: fixture
- 54: attachment plate

### CITATION LIST

### PATENT LITERATURE

Patent Literature 1: JP 2003-269385 A

## Claims

1. A fan comprising:
an impeller (16) configured to rotate to generate an air flow;
a motor (31) having a resin cylindrical surface and configured to rotate the impeller; and
a metal cover (40) including a tabular metal member (41) that has a cylindrical portion (411) wound to be smaller in diameter than the cylindrical surface of the motor and have ends overlapped with each other, and covering the cylindrical surface with the cylindrical portion being elastically deformed.

2. The fan according to claim 1, wherein
the cover comprises a thin metal sheet having a thickness of greater than or equal to 0.1 mm and less than or equal to 0.5 mm and rolled as the cylindrical portion.

3. The fan according to claim 1 or 2, wherein
the cover further includes a metal lid (42) fitted along an axis of the motor.

4. The fan according to claim 3, wherein
the metal lid of the cover has an annular portion (42a) laid over the cylindrical portion of the metal member.

5. The fan according to any one of claims 1 to 4, wherein
the motor allows a harness (33) to be led out from the cylindrical surface at a position opposite to a position provided with the impeller, and
the metal member of the cover has a cutout (41a) positioned correspondingly to a led portion of the harness.

6. The fan according to any one of claims 1 to 5, further comprising a support (50) covering the cylindrical portion of the cover.

7. A flame-retardant cover of a fan motor (31) having a resin cylindrical surface and configured to rotate an impeller of a fan (10), the flame-retardant cover comprising:
a tabular metal member (41) having a cylindrical portion (411) constituted by a thin metal sheet that has a thickness of grater than or equal to 0.1 mm and less than or equal to 0.5 mm, is wound to be smaller in diameter than the cylindrical surface of the motor, and has ends overlapped with each other, and covering the cylindrical surface with the cylindrical portion being elastically deformed; and
a metal lid (42) having an annular portion (42a) and fitted along an axis of the motor to cause the annular portion to be laid over the cylindrical portion.
